# EUROPÄISCHE PATENTSCHRIFT

(11) **EP 1 479 652 B1**
(45) Veröffentlichungstag und Bekanntmachung des Hinweises auf die Patenterteilung: **14.09.2005**
(21) Anmeldenummer: 03405330.6
(22) Anmeldetag: 12.05.2003
(51) Int. Cl.: C01C 1/08, C01B 31/20, B01D 53/94, F01N 3/20

(54) **Verfahren und Vorrichtung zur Herstellung eines Abgas-Entstickungsmittels**
Process and apparatus for the preparation of a nitrogen oxide reducer for flue gases
Procédé et dispositif pour la préparation d'un agent réducteur des oxydes d'azote dans les gaz d'échappement

(43) Veröffentlichungstag der Anmeldung: 24.11.2004
(73) Patentinhaber: Hochschule Rapperswil, Institut für angewandte Umwelttechnik, 8640 Rapperswil (CH)
(72) Erfinder: Bunge, Rainer, Prof. Dr., 8057 Zürich (CH); Ebneter, Dominik, 9043 Trogen (CH)

(56) Entgegenhaltungen:
- EP-A- 0 487 886
- DE-A- 19 960 976
- US-A- 5 252 308

## Beschreibung

Die Erfindung betrifft ein Verfahren und eine Vorrichtung nach den Oberbegriffen der entsprechenden, unabhängigen Patentansprüche. Verfahren und Vorrichtung dienen zur Herstellung eines ammoniakhaltigen Abgas-Entstickungsmittels, das insbesondere geeignet ist, Stickoxide in Abgasen von Dieselmotoren durch selektive katalytische Reduktion (SCR) zu entfernen.

Ein grosses Problem in der Luftreinhaltung ist die Bekämpfung von Stickoxiden (NOₓ). Wichtige Quellen für Stickoxide sind Dieselmotoren. Eine bei Dieselmotoren bekannte Technologie zur Bekämpfung von Stickoxiden ist das SCR-Verfahren, bei dem die Stickoxide im Abgas nach Eindüsung von Ammoniak in einer selektiven katalytischen Reduktion zerstört werden. Problematisch ist bei diesem Verfahren, dass Ammoniak giftig ist und bei seiner Handhabung und Lagerung insbesondere in reinem Zustand strenge Sicherheitsvorkehrungen eingehalten werden müssen. Aus diesem Grunde wird bei der Entstickung der Abgase von grossen (stationären) Dieselmotoren heute im Allgemeinen (ungiftiger) Harnstoff als Reduktionsmittel verwendet. Der Harnstoff wird in den Abgasstrom eingebracht und zersetzt sich dort thermisch zu Ammoniakgas und Kohlendioxid. Die Kinetik dieser thermischen Harnstoffspaltung ist jedoch so langsam, dass das Verfahren bei kleinen Dieselmotoren, insbesondere bei Dieselfahrzeugen, nicht anwendbar ist.

Für Dieselfahrzeuge wird daher in der Publikation DE 44 25 420 (Daimler Benz) vorgeschlagen, das Fahrzeug mit Harnstoff zu betanken, im Fahrzeug durch eine kontinuierliche, enzymatische Spaltung aus dem Harnstoff Ammoniak in Gasform herzustellen und dieses Ammoniak in den Abgasstrom einzubringen. Auch bei der enzymatischen Harnstoffspaltung entsteht Ammoniak und Kohlendioxid nach der folgenden Formel:

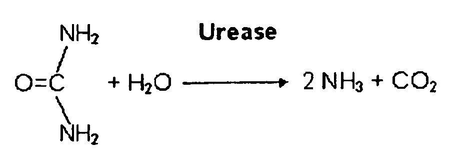

Gemäss DE 44 25 420 wird das Gasgemisch unmittelbar in den Abgasstrom eingeleitet und mit dem Abgas durch einen Katalysator geführt, wo das Ammoniak Stickoxide reduziert und das Kohlendioxid keine spezielle Funktion hat, aber auch nicht stört. Der Vorteil dieses Verfahrens besteht darin, dass das Ammoniak zwar als hochkonzentriertes Gas für die Reduktion verwendet werden kann, in dieser Form aber nicht gespeichert wird, sondern unmittelbar für den Verbrauch hergestellt wird. Eine geregelte Dosierung der Ammoniakzugabe entsprechend den Bedürfnissen von Dieselmotoren mit hochdynamischen Lastprofilen, wie bei dieselbetriebenen Fahrzeugen typisch, ist aber auch auf diese Weise nicht möglich.

Für eine solche geregelte Dosierung entsprechend den Anforderungen hochdynamischer Lastprofile scheint es unumgänglich, mindestens eine beschränkte Menge Ammoniak in möglichst konzentrierter Form an Bord zu speichern, wobei dieses Ammoniak aber beispielsweise auch in Form einer wässerigen Lösung vorliegen könnte, was weniger gefährlich ist als das Mitführen von gasförmigem Ammoniak.

Die Erfindung stellt sich nun die Aufgabe, ein Verfahren und eine Vorrichtung zu schaffen, mit denen es in einfacher Weise möglich wird, von einer beispielsweise enzymatischen oder thermischen Spaltung von Harnstoff ausgehend ein ammoniakhaltiges Abgas-Entstickungsmittel herzustellen, das insbesondere für die Entstickung von Abgasen von Dieselmotoren geeignet ist und das problemloser als gasförmiges Ammoniak gespeichert bzw. in einem Fahrzeug mitgeführt werden kann und es so erlaubt, für die Dosierung gemäss hochdynamischen Lastprofilen immer mindestens eine minimale Menge des Entstickungsmittels bereit zu halten.

Diese Aufgabe wird gelöst durch das Verfahren und die Vorrichtung, wie sie in den Patentansprüchen definiert sind.

Es zeigt sich überraschenderweise, dass es nicht genügt, das durch Harnstoffspaltung hergestellte Gasgemisch aus Ammoniak und Kohlendioxid in Wasser einzuleiten und das derart erstellte Ammoniakwasser als Entstickungsmittel zu verwenden, denn die Eindüsung dieses Ammoniakwassers in den Abgasstrang eines Dieselmotors führt zu gravierenden Komplikationen, vor allem zur Bildung von Ablagerungen im Einspritzsystem und im Katalysator selbst. Es zeigt sich, dass der Grund für diese Probleme die Tatsache ist, dass in der wässrigen Vorlage nicht nur das Ammoniak sondern auch das Kohlendioxid gelöst wird, wobei sich bei höheren Konzentrationen sogar ein Niederschlag bilden kann (vermutlich ein Ammoniumcarbonat).

Zur Vermeidung der beschriebenen Probleme wird also nach dem erfindungsgemässen Verfahren durch Harnstoffspaltung ein Gasgemisch aus Ammoniak und Kohlendioxid und daraus eine als Entstickungsmittel verwendbare, im wesentlichen Kohlendioxid-freie wässerige Ammoniaklösung hergestellt, indem aus dem Gasgemisch oder aus der daraus erstellten wässerigen Ammoniaklösung das Kohlendioxid abgetrennt wird.

Die enzymatische Harnstoffspaltung wird mit steigender Ammoniakkonzentration in der Reaktionslösung langsamer und kommt bei Umgebungstemperatur bereits bei Ammoniakkonzentrationen von knapp 4% zum Stillstand. In einem Gleichgewichtszustand wird also die erzeugte wässerige Ammoniaklösung ebenfalls knapp 4% Ammoniak enthalten. Eine solche Ammoniaklösung ist allerdings wegen der geringen Konzentration aus praktischen Gründen für den Einsatz auf Fahrzeugen nur in Ausnahmefällen geeignet, da dann sehr grosse Ammoniakwassertanks mitgeführt werden müssen. Aus diesem Grunde ist es vorteilhaft, ein derart erzeugtes Ammoniakwasser auf beispielsweise 15% oder mehr Ammoniakgehalt aufzukonzentrieren.

Bei der Verwendung einer thermischen Harnstoffspaltung kann direkt Ammoniakwasser mit genügend hohen Ammoniakkonzentrationen hergestellt werden.

Für die Entfernung des Kohlendioxids wird das aus der Harnstoffspaltung anfallende Gasgemisch über ein festes Medium (z.B. Calziumhydroxid) oder durch ein flüssiges Medium (z.B. wässerige Lösung von Calziumhydroxid) geleitet, wobei das Kohlendioxid in dem Medium beispielsweise durch Bildung einer schwerlöslichen Verbindung (z.B. Calziumkarbonat oder anderes Erdalkalicarbonat) aufgenommen wird. Es ist auch möglich, zur Bildung des Ammoniakwassers ein derartiges Medium direkt in der Harnstofflösung vorzulegen, wodurch das Kohlendioxid aus dem Ammoniakwasser ausgefällt wird. Das so entstandene Ammoniakwasser wird dann vorteilhafterweise durch Destillation aufkonzentriert, wobei die ausgefällte, schwerlösliche Verbindung zurückbleibt.

In dem erfindungsgemässen Verfahren mit enzymatischer Harnstoffspaltung und Aufkonzentrierung wird es also möglich, aus einer 10%igen Harnstofflösung ein im wesentlichen CO₂-freies, beispielsweise 16%iges Ammoniakwasser herzustellen, das problemlos gespeichert werden kann und das für die Entstickung von Dieselabgasen hervorragend geeignet ist.

Der Vorteil des erfindungsgemässe Verfahrens besteht insbesondere darin, dass das Entstickungsmittel (Kohlendioxid-freies Ammoniakwasser) wie bei den eingangs beschriebenen, bekannten Verfahren ohne Betankung mit Ammoniak erzeugt werden kann und dass es trotzdem problemlos in einem Vorratsbehälter bereit gehalten werden kann, um in variablen Mengen pro Zeiteinheit zur Verfügung zu stehen. Dem erfindnungsgemässen Verfahren wird ungefährlicher Harnstoff und Wasser zugeführt und Ammoniakwasser nach Bedarf und das abgebundene CO₂ periodisch entnommen.

Eine Vorrichtung zur Durchführung des Verfahrens weist also einen ersten Reaktor für die Harnstoffspaltung auf und einen zweiten Reaktor für die Herstellung des Amoniakwassers aus dem bei der Harnstoffspaltung anfallenden Ammoniak (Einleitung des Ammoniaks in Wasser). Der erste Reaktor weist einen Eingang für Harnstoff und Wasser, der zweite einen Eingang für Wasser und einen Ausgang für Ammoniakwasser auf. Die beiden Reaktoren sind für einen passiven oder forcierten Austausch über die Gasphase miteinander verbunden. Ferner weist die Vorrichtung ein Mittel zum Abtrennen des ebenfalls aus der Harnstoffspaltung anfallenden Kohlendioxids auf, welches Mittel ein zwischen den ersten und den zweiten Reaktor geschalteter dritter Reaktor sein kann, in dem das Kohlendioxid aus dem Gasgemisch aus Ammoniak und Kohledioxid abgetrennt wird, z.B. durch Binden an ein festes oder flüssiges Medium. Das Mittel zum Abtrennen des Kohlendioxids kann auch im ersten Reaktor integriert sein, wobei dann in diesem ersten Reaktor das Kohlendioxid beispielsweise als schwerlöslicher Niederschlag zurückgehalten wird und das Ammoniakgas in den zweiten Reaktor herüberdestilliert wird.

Die Vorrichtung kann als Kleinanlage beispielsweise auch an Tankstellen aufgestellt werden. Auf diese Weise geschieht die Produktion des giftigen Ammoniaks in begrenzten Mengen und je nach Bedarf an der Tankstelle selbst. Die Tankstelle wird periodisch mit dem ungefährlichen Harnstoff beliefert. Die Vorrichtung kann aber auch als on-board Vorrichtung ausgelegt und in Dieselfahrzeugen eingebaut sein. Derart ausgerüstete Fahrzeuge sind mit Harnstoff zu betanken und das das Kohlendioxid bindende Medium ist periodisch auszuwechseln.

Verfahren und Vorrichtung gemäss Erfindung werden anhand der folgenden Figuren im Detail beschrieben. Dabei zeigen:
- **Figur 1 und 2**: zwei sehr schematisch dargestellte, beispielhafte Ausführungsformen der erfindungsgemässen Vorrichtung mit zwischen ersten und zweiten Reaktor geschaltetem Mittel zur Abtrennung des Kohlendioxids.
- **Figur 3**: eine weitere, beispielhafte Ausführungsform der erfindungsgemässen Vorrichtung mit im zweiten Reaktor integriertem und/oder dem zweiten Reaktor nachgeschaltetem Mittel zur Abtrennung des Kohlendioxids.

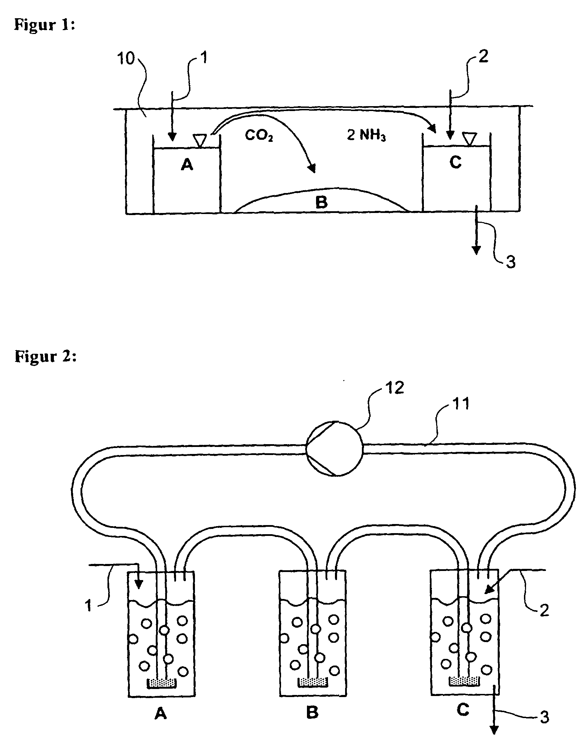

Die in beiden Figuren 1 und 2 dargestellten Ausführungsformen der erfindungsgemässen Vorrichtungen weisen einen zwischen den ersten Reaktor A für die Harnstoffspaltung und den zweiten Reaktor C für die Einleitung des Ammoniaks in Wasser einen dritten Reaktor B auf für die Abtrennung des Kohlendioxids vom in der Harnstoffspaltung hergestellten Gasgemisch aus Ammoniak und Kohlendioxid. Der erste Reaktor A weist einen Eingang 1 für die Zuführung von Harnstoff, Wasser und gegebenenfalls Urease (Harnstoff spaltendes Enzym) auf, der zweite Reaktor C einen Eingang 2 für die- Zuführung von Wasser und einen Ausgang 3 für die Wegführung von Ammoniakwasser.

Gemäss Figur 1 sind die drei Reaktoren A, B und C offen und in einem geschlossenen Gasraum 10 untergebracht, derart, dass sich sowohl die wässrige Vorlage zum Auffangen des Ammoniaks (Reaktor C), als auch die Vorlage zur Absorption des Kohlendioxids (Reaktor B) im Gleichgewicht mit dem Reaktor A befinden (passiver Gasaustausch). Durch Vorlage eines Stoffes mit hoher Affinität für CO₂ wird bewirkt, dass das im zweiten Reaktor C produzierte Ammoniakwasser weitestgehend frei von CO₂ ist. Grundsätzlich möglich ist selbstverständlich auch eine Zugabe des Bindemittels für Kohlendioxid direkt in den ersten Reaktor A. Als Bindemittel für das Kohlendioxid kommt beispielsweise ein Festkörpergranulat (z.B. Calziumhydroxid) zur Anwendung.

Vorteilhafterweise wird die wässerige Harnstofflösung im ersten Reaktor A erwärmt, wodurch einerseits die Harnstoffspaltung begünstigt wird und andererseits durch die Temperaturdifferenz zwischen der Harnstofflösung im ersten Reaktor A und der Ammoniakwasservorlage im zweiten Reaktor C eine Verlagerung des Löslichkeitsgleichgewichts des Ammoniakgases von A nach C entsteht.

Figur 2 zeigt eine Ausführungsform der erfindungsgemässen Vorrichtung mit geschlossenen Reaktoren A, B und C, wobei Reaktor B ein Mittel zum Binden des Kohlendioxids enthält. Reaktoren A und B bzw. B und C sind mit Verbindungsleitungen aus dem Gasraum des vorgehenden in die Flüssigkeit des folgenden Reaktors im Sinne von Gaswaschflaschen miteinander verbunden. Der Gasaustausch wird durch die Rückverbindung 11 mit Pumpe 12 zwischen zweitem und erstem Reaktor forciert.

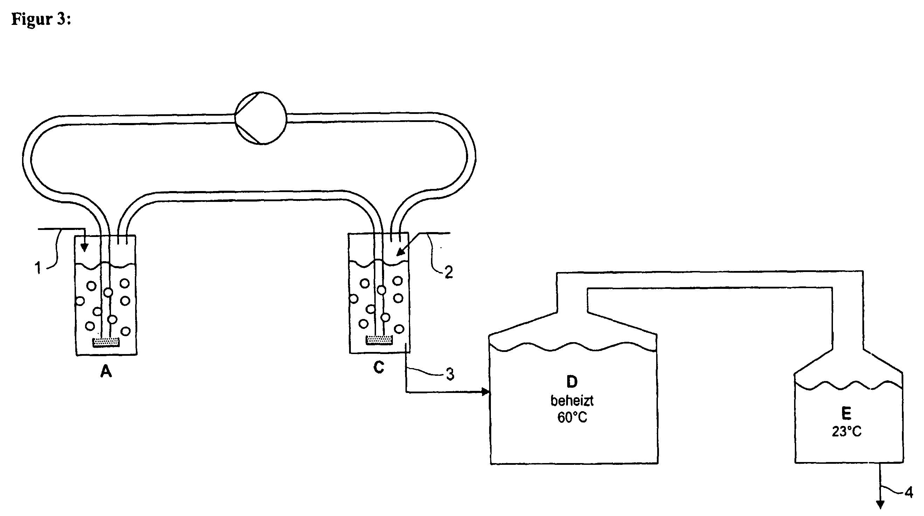

Figur 3 zeigt, wiederum sehr schematisch, eine weitere Ausführungsform der erfindungsgemässen Vorrichtung, in der das Mittel zur Abtrennung des Kohlendioxids in den zweiten Reaktor C integriert und/oder diesem nachgeschaltet ist, also das Kohlendioxid nicht aus dem Gasgemisch sondern aus dem Ammoniakwasser abgetrennt wird. Der erste und der zweite Reaktor A und C entsprechend denjenigen gemäss Figur 2. Der Ausgang 3 des zweiten Reaktors C führt in einen Destillationsbehälter D, aus dem das Ammoniakwasser zwecks Abtrennung von einer schwerlöslichen, das Kohlendioxid bindenden Ausfällung und zwecks Aufkonzentrierung in ein Destillatgefäss E mit einem Ausgang 4 für das Ammoniakwasser destilliert wird. Das Medium zum Binden des Kohlendioxids wird im Reaktor C oder im Destillationsgefäss D vorgelegt.

### Beispiel 1:

In einem geschlossenen Gasraum 1 gemäss Fig. 1 wurden drei Vorlagen bei Raumtemperatur bereitgestellt: 50ml 10%iger Harnstofflösung + 10mg Urease im offenen Reaktor A, 10g Ca(OH)₂ Pulver ausgelegt auf Behälterboden (Reaktor B) und 50ml H₂O im offenen Reaktor C. Das in A entstandene Kohlendioxid CO₂ wurde durch das Calciumhydroxid Ca(OH)₂ absorbiert und als Calziumkarbonat CaCO₃ ausgefällt. Durch kontinuierliches Ergänzen der umgesetzten Harnstoffmenge wurde die Harnstoffkonzentration in A konstant gehalten.

Versuchsresultat: nach 300h stellte sich in C eine Ammoniakkonzentration von 2% ein. Im Gleichgewicht mit Gefäss A würde auch in C eine Ammoniakkonzentration von 4% erreicht werden. Der diffusionsgesteuerte Uebergang des Ammoniaks von A nach C verlief allerdings sehr langsam und ein Ausgleich der Ammoniakkonzentrationen in den Gefässen A und C wurde erst nach deutlich mehr als 300h erreicht. Durch Zugabe einiger Tropfen einer Ba(OH)₂-Lösung wurde die Abwesenheit von CO₂ in C verifiziert.

### Beispiel 2:

In drei Waschflaschen (Reaktoren A, B und C) wurden dieselben Vorlagen wie in Beispiel 1 vorgelegt, wobei das Calziumhydroxid in Reaktor B als Pulver vorgelegt wurde. Die Waschflaschen wurden in der in Figur 2 gezeigten Weise zu einer Vorrichtung gemäss Erfindung zusammengeschaltet. Der Gasumlauf wurde durch die Pumpe 2 erzwungen. Reaktor A wurde auf 37°C erwärmt, Reaktor C auf 1°C gekühlt.

Versuchsresultat: in Reaktor C stellte sich nach 200h eine Ammoniakkonzentration von 4% ein. Durch Zugabe einiger Tropfen einer Ba(OH)₂-Lösung wurde die Abwesenheit von CO₂ verifiziert.

### Beispiel 3:

Das CO₂-freie, ca. 4%ige Ammoniakwasser, das gemäss Beispielen 1 und 2 im Reaktor C anfiel, wurde durch Destillation aufkonzentriert. Dabei wurde das wenig konzentrierte Ammoniakwasser auf 60°C erhitzt und das Destillat auf Raumtemperatur (23°C) gehalten. Im Destillat wurde auf diese Weise ein Ammoniak-Endgehalt von 16% erreicht.

Bei der Aufkonzentration des Ammoniaks durch Destillation kann neben der Temperaturdifferenz auch ein Druckunterschied zwischen den Gefässen zur Begünstigung des Überganges von Ammoniakgas verwendet werden.

## Patentansprüche

1. Verfahren zur Herstellung eines Entstickungsmittels, das sich insbesondere für die Entstickung von Abgasen von Dieselmotoren eignet, wobei das Entstickungsmittel durch Harnstoffspaltung hergestelltes Ammoniak enthält, **dadurch gekennzeichnet, dass** das aus der Harnstoffspaltung anfallende, gasförmige Ammoniak in Wasser eingeleitet wird, und dass das ebenfalls bei der Harnstoffspaltung anfallende Kohlendioxid vom Ammoniak abgetrennt wird.

2. Verfahren nach Anspruch 1, **dadurch gekennzeichnet, dass** das aus der Harnstoffspaltung anfallende Kohlendioxid durch Bildung einer schwerlöslichen Verbindung abgetrennt wird.

3. Verfahren nach einem der Ansprüche 1 oder 2, **dadurch gekennzeichnet, dass** das durch Einleitung des Ammoniaks in Wasser entstehende Ammoniakwasser zusätzlich aufkonzentriert wird.

4. Verfahren nach Anspruch 3, **dadurch gekennzeichnet, dass** die Aufkonzentrierung eine Destillation ist.

5. Verfahren nach einem der Ansprüche 1 bis 4, **dadurch gekennzeichnet, dass** das Kohlendioxid vor der Einleitung des Ammoniaks in Wasser abgetrennt wird.

6. Verfahren nach Anspruch 3 oder 4, **dadurch gekennzeichnet, dass** das Kohlendioxid aus dem durch Einleitung des Ammoniaks in Wasser entstehenden Ammoniakwasser ausgefällt wird.

7. Verwendung des Verfahrens nach einem der Ansprüche 1 bis 6 zur Herstellung von Ammoniakwasser in einem Dieselfahrzeug oder an einer Tankstelle.

8. Vorrichtung zur Herstellung eines Entstickungsmittels, das sich insbesondere für die Entstickung von Abgasen von Dieselmotoren eignet, wobei das Entstickungsmittel durch Harnstoffspaltung hergestelltes Ammoniak enthält, welche Vorrichtung einen ersten Reaktor (A) für die Harnstoffspaltung aufweist, **dadurch gekennzeichnet, dass** die Vorrichtung ferner einen zweiten Reaktor (C) für das Einleiten des aus der Harnstoffspaltung anfallenden Ammoniaks in Wasser und ein Mittel zur Abtrennung von Kohlendioxid vom Ammoniak aufweist.

9. Vorrichtung nach Anspruch 8, **dadurch gekennzeichnet, dass** das Mittel zur Abtrennung des Kohlendioxids zwischen den ersten Reaktor (A) und den zweiten Reaktor (C) geschaltet ist.

10. Vorrichtung nach Anspruch 8, **dadurch gekennzeichnet, dass** das Mittel zum Abtrennen des Kohlendioxids im zweiten Reaktor (C) integriert ist.

11. Vorrichtung nach Anspruch 8, **dadurch gekennzeichnet, dass** das Mittel zum Abtrennen des Kohlendioxids im ersten Reaktor (A) integriert ist.

## Claims

1. A method for manufacturing a denitration agent which in particular is suitable for the denitration of exhaust gases of diesel motors, wherein the denitration agent contains ammonia manufactured by way of urea splitting, **characterised in that** the gaseous ammonia occurring from the urea splitting is introduced into water, and that the carbon dioxide which likewise occurs with the urea splitting is separated off from the ammonia.

2. A method according to claim 1, **characterised in that** the carbon dioxide occurring from the urea splitting is separated off by way of formation of a low-soluble compound.

3. A method according to one of the claims 1 or 2, **characterised in that** the ammonia liquor arising by way of the introduction of the ammonia into water is additionally concentrated.

4. A method according to claim 3, **characterised in that** the concentration is a distillation.

5. A method according to one of the claims 1 to 4, **characterised in that** the carbon dioxide is separated off before the introduction of the ammonia into water.

6. A method according to one of the claim 3 or 4, **characterised in that** the carbon dioxide is precipitated from the ammonia liquor arising by way of the introduction of the ammonia into water.

7. The use of the method according to one of the claims 1 to 6 for manufacturing ammonia liquor in a diesel vehicle or at a petrol station.

8. A device for manufacturing a denitration agent which in particular is suitable for the denitration of exhaust gases of diesel motors, wherein the denitration agent contains ammonia manufactured by urea splitting, said device comprising a first reactor (A) for the urea splitting, **characterised in that** the device furthermore comprises a second reactor (B) for the introduction of the ammonia occurring from the urea splitting into water and a means for separating off carbon dioxide from ammonia.

9. A device according to claim 8, **characterised in that** the means for separating off the carbon dioxide is connected between the first reactor (A) and the second reactor (C).

10. A device according to claim 8, **characterised in that** the means for separating off the carbon dioxide is integrated in the second reactor (C) and/or is connected downstream of this.

11. A device according to claim 8, **characterised in that** the means for separating off the carbon dioxide is integrated in the first reactor (A).

## Revendications

1. Procédé pour la fabrication d'un agent de dénitruration qui convient en particulier pour la dénitruration des gaz d'échappement des moteurs Diesel, l'agent de dénitruration contenant de l'ammoniaque produit par dédoublement de l'urée, **caractérisé en ce que** l'ammoniaque gazeux résultant du dédoublement de l'urée est introduit dans de l'eau et que le gaz carbonique également résultant du dédoublement de l'urée est séparé.

2. Procédé selon la revendication 1, **caractérisé en ce que** le gaz carbonique résultant du dédoublement de l'urée est séparé par la formation d'une liaison à solubilité réduite.

3. Procédé selon l'une des revendications 1 ou 2, **caractérisé en ce que** l'eau ammoniacale qui se forme par l'introduction de l'ammoniaque dans l'eau est concentrée de manière supplémentaire.

4. Procédé selon la revendication 3, **caractérisé en ce que** la concentration est une distillation.

5. Procédé selon l'une des revendications 1 à 4, **caractérisé en ce que** le gaz carbonique est séparé avant l'introduction de l'ammoniaque dans de l'eau.

6. Procédé selon la revendication 3 ou 4, **caractérisé en ce que** le gaz carbonique est précipité à partir de l'eau ammoniacale qui se forme par l'introduction de l'ammoniaque dans l'eau.

7. Utilisation du procédé selon l'une des revendications 1 à 6 pour la fabrication d'eau ammoniacale dans un véhicule Diesel ou dans une station-service.

8. Dispositif pour la fabrication d'un agent de dénitruration qui convient en particulier pour la dénitruration de gaz d'échappement de moteurs Diesel, l'agent de dénituration contenant de l'ammoniaque fabriqué par dédoublement de l'urée, lequel dispositif présente un premier réacteur (A) pour le dédoublement de l'urée, **caractérisé en ce que** le dispositif présente de plus un second réacteur (B) pour l'introduction de l'ammoniaque résultant du dédoublement de l'urée dans l'eau et un moyen pour la séparation du gaz carbonique de l'ammoniaque.

9. Dispositif selon la revendication 8, **caractérisé en ce que** le moyen pour la séparation du gaz carbonique est placé entre le premier réacteur (A) et le second réacteur (C).

10. Dispositif selon la revendication 8, **caractérisé en ce que** le moyen pour la séparation du gaz carbonique est intégré dans le second réacteur (C) et/ou est placé en aval de celui-ci.

11. Dispositif selon la revendication 8, **caractérisé en ce que** le moyen pour la séparation du gaz carbonique est intégré au premier réacteur (A).
